# EUROPÄISCHE PATENTSCHRIFT

(11) **EP 1 869 336 B1**
(45) Veröffentlichungstag und Bekanntmachung des Hinweises auf die Patenterteilung: **11.11.2009**
(21) Anmeldenummer: 06722612.6
(22) Anmeldetag: 16.03.2006
(51) Int. Cl.: F16D 13/75

(54) **REIBUNGSKUPPLUNG**
FRICTION CLUTCH
EMBRAYAGE A FRICTION

(30) Priorität: 08.04.2005 DE 102005016133
(43) Veröffentlichungstag der Anmeldung: 26.12.2007
(73) Patentinhaber: LuK Lamellen und Kupplungsbau Beteiligungs KG, 77815 Bühl (DE)
(72) Erfinder: FRIEDMANN, Oswald, 77839 Lichtenau (DE)
(86) Internationale Anmeldenummer: PCT/DE2006/000455
(87) Internationale Veröffentlichungsnummer: WO 2006/105750

(56) Entgegenhaltungen:
- DE-A1- 3 420 537
- US-A1- 2003 141 163
- US-A1- 2004 079 607

## Beschreibung

Die Erfindung betrifft eine selbstnachstellende Reibungskupplung mit einem Gehäuse und einer mit diesem drehfest jedoch axial begrenzt verlagerbar verbundenen Anpressplatte, wobei zwischen Gehäuse und Anpressplatte eine verschwenkbare Hebelanordnung vorgesehen ist, mittels derer die Anpressplatte zum Ein- und Ausrücken der Reibungskupplung axial verlagerbar ist. Die Hebelanordnung umfasst dabei eine Mehrzahl von ringartig angeordneten Hebelelementen.

Derartige Reibungskupplungen sind beispielsweise durch die DE 10316445 A1 oder US2003/0141163 A1 vorgeschlagen worden.

Der vorliegenden Erfindung lag die Aufgabe zugrunde, Reibungskupplungen der eingangs genannten Art zu schaffen, bei denen durch einfaches Betätigen der Hebelelemente eine Verstellung zwischen wenigstens zwei Bauteilen einer solchen Reibungskupplung erzielt werden kann. Ein weiteres Ziel der vorliegenden Erfindung ist es, innerhalb einer Reibungskupplung einen Verstellmechanismus zu schaffen, der durch Betätigung der Hebelelemente eine Nachstellung innerhalb der Reibungskupplung bewirkt. Dieser Nachstellmechanismus soll dabei besonders funktionssicher sein und eine einfache Montage sowie kostengünstige Herstellung der Reibungskupplung ermöglichen.

Gemäß der Erfindung wird dies unter anderem dadurch erzielt, dass ein ringartiges Bauteil mit der Hebelanordnung derart in Wirkverbindung steht, dass es durch Verschwenkung dieser Hebelanordnung eine radiale Aufweitung und Verkleinerung erfahren kann, wobei das ringartige Bauteil zwei Endbereiche besitzt, von denen der eine gegenüber der Hebelanordnung zumindest in Umfangsrichtung fest ist und der andere während einer durchmessermäßigen Aufweitung und Verkleinerung des ringartigen Bauteils eine im Wesentlichen lineare Bewegung erfährt, mittels der eine Betätigung einer die Hebelanordnung verdrehenden Stelleinrichtung auslösbar ist. Hierfür kann beispielsweise das ringartige Bauteil entweder mittelbar oder unmittelbar zumindest mit einigen Hebeln der Hebelanordnung derart verbunden sein, dass während einer Veränderung der konischen Lage der Hebelanordnung eine Durchmesservergrößerung und -verringerung der kreisartig verlaufenden Bereiche des ringartigen Bauteils stattfindet. Besonders zweckmäßig kann es dabei sein, wenn beim Ausrücken der Reibungskupplung eine durchmessermäßige Verkleinerung und beim Wiedereinrücken, also schließen der Reibungskupplung, eine durchmessermäßige Vergrößerung des ringartigen Bauteils erfolgt.

Mittels des vorerwähnten anderen, eine im wesentlichen lineare Bewegung ausführenden Endes kann beispielsweise eine freilaufähnlich wirkende Verstelleinrichtung betätigt werden, mittels der die Hebelanordnung zum Beispiel gegenüber dem Kupplungsgehäuse verdreht werden kann. Eine solche Verdrehung kann zur Kompensation des zumindest an den Reibbelägen einer Kupplungsscheibe auftretenden Verschleißes benutzt werden. Hierfür kann beispielsweise durch die Verdrehung der Hebelanordnung eine Rampenvorrichtung betätigt werden, wodurch beispielsweise die Anpressplatte entsprechend dem aufgetretenen Verschleiß zumindest gegenüber dem Kupplungsgehäuse axial verlagert wird.

Für die Funktion und den Aufbau der Reibungskupplung kann es besonders vorteilhaft sein, wenn die Hebelelemente zur Bildung eines ringförmigen Bauteils miteinander verbunden sind, wobei dieses ringförmige Bauteil durch Verschwenkung der Hebelanordnung in seiner Konizität veränderbar ist. Die einzelnen Hebel der Hebelanordnung können dabei radial außen über einen ringförmigen Grundkörper verbunden sein. Dieser ringförmige Grundkörper kann als Energiespeicher dienen. Ein derart ausgestaltetes Bauteil bildet eine so genannte Tellerfeder. Die Tellerfeder kann dabei derart ausgebildet sein, dass sie bei montierter Reibungskupplung zumindest teilweise deren Schließkraft erzeugt. Zweckmäßig kann es sein, wenn die Tellerfeder die volle Schließkraft aufbringt. Es kann jedoch auch für manche Anwendungsfälle vorteilhaft sein, wenn die Schließkraft von außerhalb über die Hebelanordnung in die Reibungskupplung eingeleitet wird, wobei es dann zweckmäßig sein kann, wenn die Hebelanordnung beziehungsweise, das diese umfassende ringförmige Bauteil in Öffnungsrichtung der Reibungskupplung eine gewisse Vorspannung aufweist. Das mit dem ringförmigen Bauteil beziehungsweise der Hebelanordnung zusammenwirkende Betätigungssystem zum Öffnen und Schließen der Reibungskupplung kann mit den Hebeln derart gekoppelt sein, dass es auf diese lediglich in eine axiale Richtung eine Kraft aufbringen kann oder aber in beide axiale Richtungen. Letzteres bedeutet also, dass die Hebel durch das Betätigungssystem sowohl gedrückt als auch gezogen werden können.

Besonders zweckmäßig kann es sein, wenn zwischen der Hebelanordnung beziehungsweise dem ringförmigen Bauteil und der Anpressplatte eine zumindest den Verschleiß der Reibbeläge einer mit der Reibungskupplung zusammenwirkenden Kupplungsscheibe ausgleichende Kompensationseinrichtung vorhanden ist. In vorteilhafter Weise kann eine solche Kompensationseinrichtung zumindest eine Rampenanordnung umfassen. Eine solche Rampenanordnung besitzt vorzugsweise mehrere in Umfangsrichtung angeordnete, in axialer Richtung ansteigende Rampen. Die Kompensationseinrichtung kann dabei in einfacher Weise durch Verdrehung der Hebelanordnung mittels der Verstelleinrichtung betätigt werden.

Das über die Hebelanordnung durchmessermäßig veränderbare ringartige Bauteil kann in vorteilhafter Weise in Bezug auf die Hebelanordnung zumindest stellenweise in radialer Richtung abgestützt und in Umfangsrichtung geführt sein. Eine derartige Abstützung und Führung kann mittels mit den Hebelelementen verbundenen Abstützelementen erfolgen. Derartige Abstützelemente können ringartig über den Umfang verteilt angeordnet sein. Die vorerwähnte Abstützung und Führung des ringartigen Bauteils kann jedoch zumindest stellenweise auch mittels einstückig mit dem die Hebelelemente oder das ringförmige Bauteil bildende Material, wie insbesondere Blech, ausgebildet sein. Es kann jedoch auch zweckmäßig sein, hierfür getrennte Bauteile zu verwenden, die zum Beispiel nietartig ausgebildet und mit Hebelelementen verbunden sind.

Zweckmäßig kann es sein, wenn die Abstützelemente derart ausgebildet sind, dass sie die Hebelelemente beziehungsweise die Hebelanordnung oder das ringförmige Bauteil, wie insbesondere Tellerfeder, am Gehäuse verschwenkbar abstützen.

Das von der Hebelanordnung beziehungsweise dem ringförmigen Bauteil getragene ringartige Bauteil ist in vorteilhafter Weise derart innerhalb der Reibungskupplung positioniert, dass es axial gegenüber den Hebelelementen beabstandet ist.

In vorteilhafter Weise kann die Reibungskupplung derart ausgestaltet sein, dass die Hebelelemente oder das ringförmige Bauteil gegen eine vom Gehäuse getragene Schwenklagerung zumindest im eingerückten Zustand der Reibungskupplung verspannt sind und das ringartige Bauteil gegenüber dieser Schwenklagerung axial versetzt angeordnet ist. Eine derartige Anordnung des ringartigen Bauteils begünstigt dessen durchmessermäßige Veränderung während einer Betätigung der Reibungskupplung.

Die mittels des ringartigen Bauteils betätigbare Verstelleinrichtung kann in vorteilhafter Weise derart ausgebildet sein, dass sie - in Umfangsrichtung der Reibungskupplung betrachtet - in die eine Drehrichtung freilaufähnlich wirkt und somit ein Verdrehen der Hebelanordnung ermöglicht, wohingegen in die andere Drehrichtung eine Sperrung erfolgt, so dass ein Zurückdrehen der Hebelanordnung verhindert wird.

Weiterhin kann es zweckmäßig sein, wenn zwischen der Hebelanordnung und einem gegenüber dieser verdrehbaren weiteren Bauteil der Reibungskupplung eine weitere freilaufähnlich wirkende Sperreinrichtung vorgesehen ist, die ebenfalls ein Zurückdrehen der Hebelanordnung blockiert.

Zur Bildung einer Kompensationseinrichtung können zumindest einige der Hebelelemente oder das ringförmige Bauteil in Umfangsrichtung verlaufende, sich axial erhebende Auflauframpen aufweisen. Weiterhin kann es zweckmäßig sein, wenn die Anpressplatte und/oder das Gehäuse Gegenauflauframpen aufweist, die mit den Auflauframpen zusammenwirken.

Die Verstelleinrichtung und/oder die weitere Sperreinrichtung können ineinandergreifende Profilierungen und Gegenprofilierungen aufweisen, welche in die eine Relatiwerdrehrichtung eine Verdrehung der Hebelanordnung gegenüber dem Gehäuse ermöglichen, jedoch in die andere Relatiwerdrehrichtung eine Sperrwirkung besitzen. Diese Profilierungen und Gegenprofilierungen können in vorteilhafter Weise federnd verspannt sein. Die Profilierungen und Gegenprofilierungen können beispielsweise sägezahnähnlich ausgebildet sein, wobei die Flanken eines Sägezahns unterschiedliche Steigungen aufweisen, um die erwähnte Nachstellung in die eine Relatiwerdrehrichtung und eine Sperrung in die andere Relatiwerdrehrichtung zwischen den entsprechenden Bauteilen zu gewährleisten.

Weitere Vorteile und konstruktive sowie funktionelle, zweckmäßige Weiterbildungen des Erfindungsgegenstandes sind aus der folgenden Figurenbeschreibung zu entnehmen.

Dabei zeigen:
- Figur 1: eine Draufsicht einer erfindungsgemäß ausgestalteten Reibungskupplung, wobei jedoch nicht alle Bauteile komplett dargestellt sind,
- Figur 2: einen Schnitt durch eine erfindungsgemäße Reibungskupplung im geschlossenen Zustand,
- Figur 2a: eine Einzelheit der Figur 2, welche die Schwenklagerung der Kupplungstellerfeder im vergrößerten Maßstab zeigt,
- Figur 2b: eine vergrößerte Einzelheit der in Figur 1 ersichtlichen Verschleißsensoreinrichtung.
- Figur 3: einen Teilschnitt, der in den Figuren 1 und 2 dargestellten Reibungskupplung im ausgerückten Zustand,
- Figur 4: einen Schnitt durch eine Ausführungsvariante einer Reibungskupplung,
- Figur 5: eine Draufsicht der Reibungskupplung gemäß Figur 4, wobei die Bauteile nicht vollständig dargestellt sind.

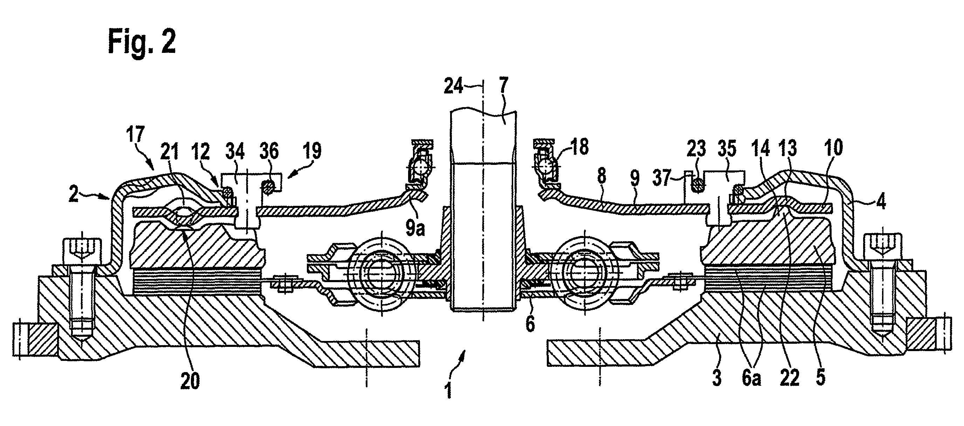

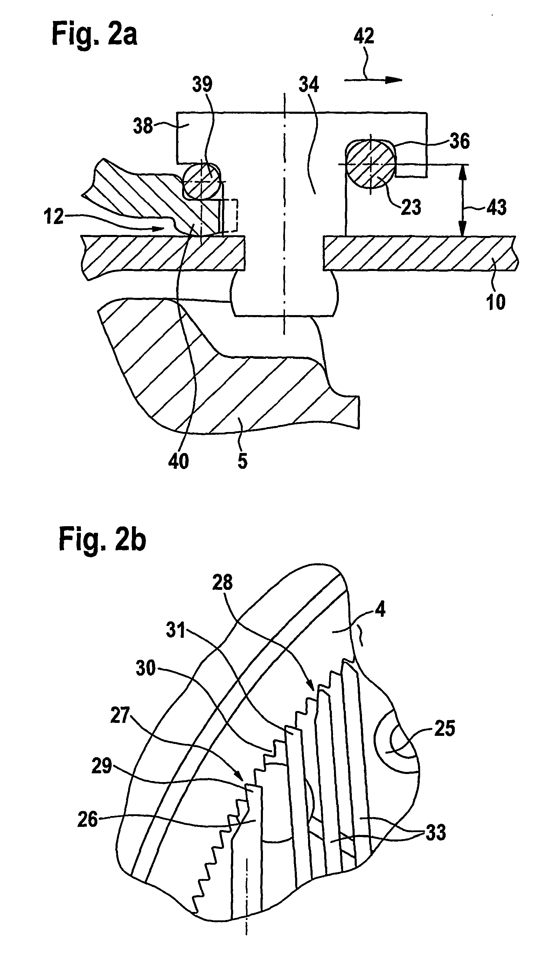

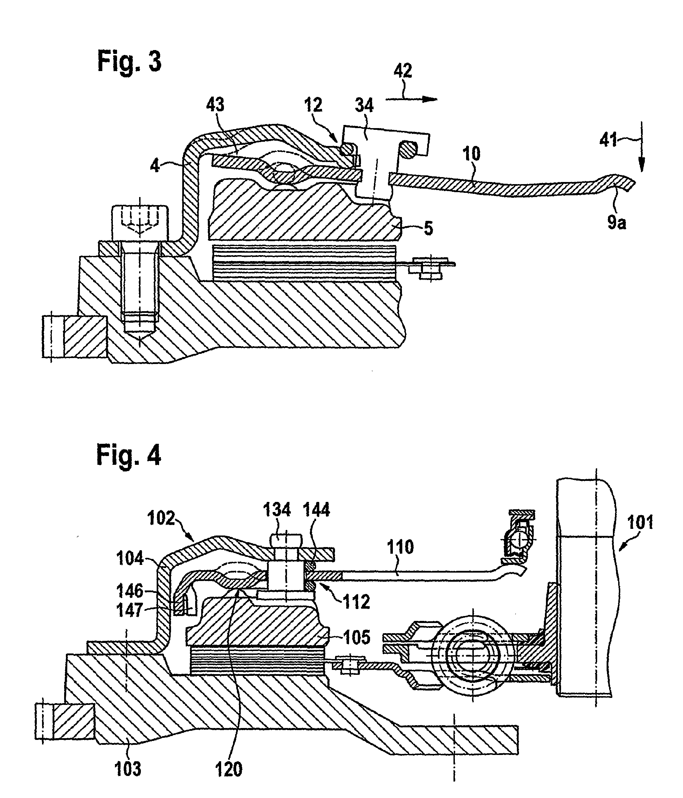

Wie beispielsweise aus den Figuren 2 und 3 zu entnehmen ist, besitzt das Kupplungsaggregat 1 eine Reibungskupplung 2, die auf einer Gegendruckplatte, wie z. B. einem Schwungrad 3, montiert ist.

Die Reibungskupplung 2 besitzt ein Gehäuse 4, das mit der Gegendruckplatte 3 fest verbunden ist, und zwar bei dem dargestellten Ausführungsbeispiel mittels Schraubverbindungen. Die Anpressplatte 5 der Reibungskupplung 2 ist mit dem als Blechdeckel ausgebildeten Gehäuse 4 drehfest, jedoch axial begrenzt verlagerbar verbunden. Letzteres kann beispielsweise über Blattfederkoppelungen erfolgen. Zwischen der Anpressplatte 5 und der Gegendruckplatte 3 sind die Reibbeläge 6a einer Kupplungsscheibe 6 einspannbar. Die Kupplungsscheibe 6 ist mit einer Getriebeeingangswelle 7 in an sich bekannter Weise zur Drehmomentübertragung verbunden. Die in Figur 2 dargestellte Position der einzelnen Bauteile entspricht dem geschlossenen Zustand der Reibungskupplung 2.

Die in Figur 3 dargestellte Stellung der einzelnen Bauteile entspricht dem geöffneten Zustand der Reibungskupplung 2.

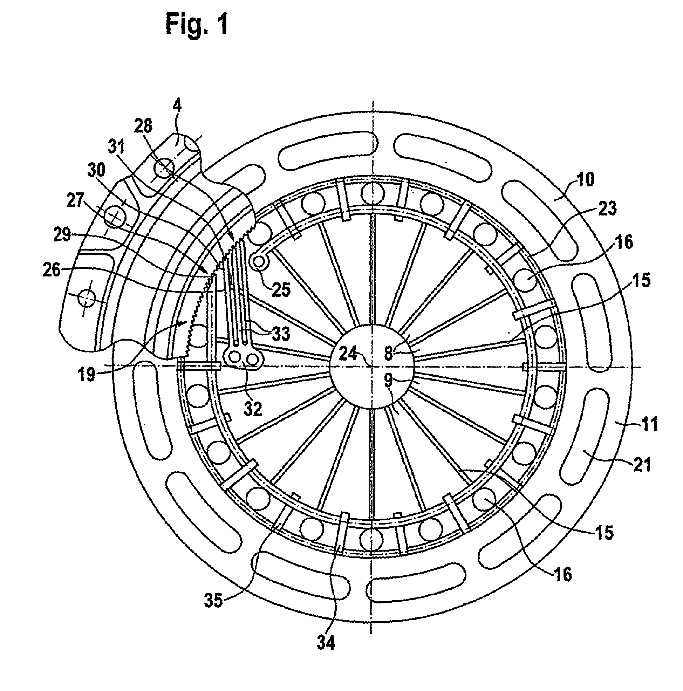

Wie aus Figur 1 zu entnehmen ist, besteht hier die Hebelanordnung 8 aus einer Mehrzahl von ringartig angeordneten Hebelelementen 9, die derart miteinander verbunden sind, dass sie ein ringförmiges Bauteil 10 bilden. Bei dem dargestellten Ausführungsbeispiel sind hierfür die Hebelelemente 9 umfangsmäßig über einen ringförmigen Bereich 11 miteinander gekoppelt. Der ringförmige Bereich 11 besitzt eine Eigenelastizität, die eine Konizitätsveränderung des ringartigen Bauteils und somit ein Verschwenken der Hebelelemente 9 ermöglicht. Die Hebelelemente 9 bilden also gemeinsam mit dem ringförmigen Bereich 11 eine so genannte Tellerfeder, bei der der ringförmige Bereich 11 einen Energiespeicher bildet, von dem aus radial nach innen verlaufende Tellerfederzungen 9 ausgehen, wobei letztere als Hebelelemente zum Verschwenken des ringförmigen Bereiches 11 dienen.

Wie aus den Figuren 2 und 3 und insbesondere aus der Vergrößerung gemäß Figur 2a zu entnehmen ist, ist die Tellerfeder 10 am Kupplungsgehäuse 4 verschwenkbar abgestützt, und zwar über eine Verschwenklagerung 12. Bei dem dargestellten Ausführungsbeispiel ist die Verschwenklagerung 12 derart angeordnet, dass die Tellerfeder 10 als zweiarmiger Hebel um die Verschwenklagerung 12 verschwenkbar ist.

Die Tellerfeder 10 stützt sich über einen radial weiter außen liegenden, ringförmigen Bereich 13 an der Anpressplatte 5 ab, und zwar bei der dargestellten Ausführungsform an Nocken 14 dieser Anpressplatte 5.

Die einzelnen Zungen bzw. Hebelelemente 9 sind voneinander durch Schlitze 15 getrennt, die radial außen in Erweiterungen 16 münden.

Die Reibungskupplung 2 besitzt eine Verschleißnachstelleinrichtung 17, mittels der zumindest ein an den Reibbelägen 6a der Kupplungsscheibe 6 auftretender Verschleiß kompensiert werden kann, wodurch die Funktionsparameter der Reibungskupplung 2 zumindest im Wesentlichen konstant gehalten werden können. Durch die Verschleißkompensation soll insbesondere gewährleistet werden, dass ein im Wesentlichen konstanter Betätigungskraftverlauf für die Reibungskupplung 2 erhalten bleibt. Dies wird unter anderem dadurch erzielt, dass die Tellerfeder 10 im eingerückten Zustand der Reibungskupplung 2 über die gesamte Lebensdauer der Kupplungsscheibe 6 bzw. der Reibungskupplung 2 einen zumindest konstanten Verspannungszustand beibehält.

Zum Betätigen der Reibungskupplung 2 werden die radial inneren Hebel- bzw. Zungenspitzen 9a von einer Betätigungseinrichtung axial verlagert. Diese Verlagerung bewirkt, dass die Tellerfeder 10 um die Verschwenklagerung 12 nach Art eines zweiarmigen Hebels verschwenkt wird, wodurch die Anpressplatte 5 entlastet wird. In Figur 2 ist das Betätigungslager 18 einer solchen Betätigungseinrichtung ersichtlich. Das Betätigungslager 18 kann Bestandteil einer hydraulischen oder pneumatischen oder mechanischen oder elektrischen Betätigungseinrichtung sein. Diese Betätigungseinrichtungen können auch in vorteilhafter Weise Teil eines Gesamtsystems sein, welche eine halbautomatisierte oder automatisierte Betätigung des Kupplungsaggregates 1 ermöglicht, wobei ein derartiges Gesamtsystem auch eine automatisierte oder vollautomatische Betätigung des Getriebes umfassen kann.

Die Verschleißnachstelleinrichtung 17 umfasst sowohl eine den Verschleiß fühlende bzw. ermittelnde und die Verschleißnachstellung auslösende Einrichtung 19, die im Folgenden als Verschleißsensoreinrichtung 19 bezeichnet wird, als auch die eigentliche Verschleißkompensation bewirkende Ausgleichseinrichtung 20, die zwischen der Tellerfeder 10 und der Anpressplatte 5 wirksam ist. Diese Ausgleichseinrichtung 20 umfasst zumindest eine Rampenanordnung mit in Umfangsrichtung hintereinander angeordneten, sich in Umfangsrichtung erstreckenden und axial erhebenden Auflauframpen, welche gewährleistet, dass bei einer Relativverdrehung zwischen dem als Tellerfeder ausgebildeten ringartigen Bauteil 10 und dem Kupplungsgehäuse 4 eine axiale Verlagerung zumindest der Anpressplatte 5 erfolgt. Durch diese axiale Verlagerung wird zumindest der an den Reibbelägen 6a auftretende Verschleiß kompensiert.

Bei dem dargestellten Ausführungsbeispiel umfasst die Ausgleichseinrichtung 20 sowohl eine hier unmittelbar an die Tellerfeder 10 angeformte Rampenanordnung 21 als auch eine hier unmittelbar an die Anpressplatte 5 angeformte Rampenanordnung 22, welche durch entsprechende Ausgestaltung der Nocken 14 gebildet ist. Zumindest eine der Rampenanordnungen 21, 22 könnte jedoch auch durch ein separates ringförmiges Bauteil gebildet sein, welches mit der Tellerfeder 10 bzw. der Anpressplatte 5 entsprechend gekoppelt wäre.

Bezüglich der Funktionsweise, Anordnung und Ausgestaltungsmöglichkeiten der vorerwähnten zumindest einen Rampenanordnung 21, 22 wird auf die ebenfalls selbstnachstellende Reibungskupplungen betreffenden Anmeldungen DE 42 39 291 A1, DE 42 39 289 A1, DE 43 22 677 A1, DE 195 24 827 A1 und DE 199 11 667 A1 verwiesen, so dass im Rahmen der vorliegenden Anmeldung diesbezüglich auf die speziellen Ausgestaltungsmöglichkeiten derartiger Rampen nicht näher eingegangen werden muss.

Wie aus Figur 2 erkennbar, ist die Rampenanordnung 21 dem ringförmigen Bereich 13 der Tellerfeder 10 angeformt.

Die Verschleißsensoreinrichtung 19, welche auch als Verstelleinrichtung bezeichnet werden kann, da sie den eigentlichen Verschleißausgleich durch Verdrehung der Tellerfeder 10 gegenüber dem Gehäuse 4 bewirkt, umfasst ein ringartiges Bauteil 23, welches von der Hebelanordnung 8 bzw. der Tellerfeder 10 getragen ist. Wie aus Figur 1 ersichtlich ist, ist das ringartige Bauteil 23 im Wesentlichen konzentrisch zur Drehachse 24 des Kupplungsaggregates angeordnet. Das ringartige Bauteil 23 ist bei dem dargestellten Ausführungsbeispiel über den Umfang offen ausgebildet, wobei das eine Ende 25 drehfest mit der Hebelanordnung 8 bzw. der Tellerfeder 10 verbunden ist und das andere Ende 26 ein Bestandteil einer freilaufähnlichen Einrichtung 27 bildet, die im Folgenden als Freilaufeinrichtung 27 bezeichnet wird.

Zwischen der Hebelanordnung 8 bzw. der Tellerfeder 10 ist eine weitere freilaufähnliche Einrichtung 28 vorhanden, die im Folgenden noch näher beschrieben wird. Diese Einrichtung 28 gewährleistet, dass die Tellerfeder 10 nur in eine Drehrichtung gegenüber dem Gehäuse 4 verdreht werden kann, wodurch die mittels des ringartigen Bauteils 23 erfolgte Verschleißnachstellung erhalten bleibt. Durch die freilaufähnliche Einrichtung 28 wird also gewährleistet, dass kein Abrutschen der Rampenanordnung 21 gegenüber der Rampenanordnung 22 auftreten kann.

Im Folgenden werden der Einfachheit halber die beiden freilaufähnlichen Einrichtungen 27 und 28 als Freilaufeinrichtungen bezeichnet. Diese Freilaufeinrichtungen 27 und 28 bilden praktisch eine Fördereinrichtung, die in Kombination mit Konizitätsveränderungen bzw. Schwenkbewegungen der Hebelanordnung 8 bzw. der Tellerfeder 10 eine Drehbewegung zwischen dieser Hebelanordnung 8 bzw. Tellerfeder 10 und einem anderen Bauteil, das hier durch das Gehäuse 4 gebildet ist, bewirkt. Die Freilaufeinrichtung 27 umfasst eine im Endbereich 26 des ringförmigen Bauteiles 23 angeformte zahnartige Profilierung 29, die mit einer Gegenprofilierung 30 zusammenwirkt. In ähnlicher Weise besitzt die Freilaufeinrichtung 28 Profilierungen 31, die mit der Hebelanordnung 8 bzw. der Tellerfeder 10 drehverbunden sind und ebenfalls mit den Gegenprofilierungen 30 zusammenwirken. Die ineinandergreifenden Profilierungen 29, 30 und 31 sind derart aufeinander abgestimmt, dass, in Umfangsrichtung des Kupplungsaggregates 1 betrachtet, bei dem dargestellten Ausführungsbeispiel die Hebelanordnung 8 bzw. die Tellerfeder 10 sich entgegen des Uhrzeigerdrehsinns gegenüber dem Kupplungsgehäuse 4 verdrehen kann, wohingegen im Uhrzeigerverdrehsinn eine Sperrwirkung zwischen den Profilierungen 29, 31 und den Gegenprofilierungen 30 erfolgt.

Bei dem dargestellten Ausführungsbeispiel sind die Profilierungen 29, 31 und Gegenprofilierungen 30 durch Verzahnungen gebildet. Die Flanken dieser Verzahnungen sind bezüglich ihres Verlaufes beziehungsweise ihrer schrägen Anordnung derart ausgebildet, dass die vorerwähnten Freilauf- beziehungsweise Sperreigenschaften gegeben sind.

Die Profilierungen 31 sind hier von einem kammartig ausgebildeten Element 32 gebildet, welches fest mit der Tellerfeder 10 verbunden ist. Dieses Element 32 besitzt hier drei Federstäbe 33, die als elastische Biegebalken wirksam sind und im Wesentlichen tangentialartig verlaufen. Am freien Ende der Biegebalken beziehungsweise Federstäbe 33 sind die Profilierungen 31 angeformt. Die als Biegebalken wirksamen Federstäbe 33 gewährleisten eine radiale Bewegungsmöglichkeit der Zähne beziehungsweise Profilierungen 31. Die mit den Zähnen beziehungsweise Profilierungen 29, 31 zusammenwirkenden Zähne beziehungsweise Gegenprofilierungen 30 sind bei dem dargestellten Ausführungsbeispiel als durchgehendes, verzahntes Segment ausgebildet. Die umfangsmäßige Erstreckung dieses Verzahnungssegmentes ist derart bemessen, dass über die gesamte Lebensdauer der Reibungskupplung, also über den gesamten erforderlichen Nachstellweg ein Eingriff zwischen den Profilierungen 29, 31 und Gegenprofilierungen 30 gewährleistet wird.

Bei dem dargestellten Ausführungsbeispiel sind die Gegenprofilierungen beziehungsweise Zähne 30 unmittelbar in das aus Blech hergestellte Gehäuse 4 eingeprägt. Die Zähne 30 könnten jedoch auch durch ein zusätzliches Bauteil gebildet sein, welches beispielsweise vom Gehäuse getragen wird.

Das ringartige Bauteil 23 der Verschleißsensoreinrichtung 19 ist als Federring ausgebildet und bei der Ausgestaltungsform gemäß den Figuren 1 bis 2a mittels Nietelementen 34, 35 mit der Hebelanordnung 8 beziehungsweise der Tellerfeder 10 wirkungsmäßig verbunden. Wie insbesondere aus Figur 2 und Figur 2a zu entnehmen ist, bilden die Nietelemente 34, 35 nutartige Aufnahmen 36, 37 für das hier im Querschnitt ringförmig ausgebildete, federnde Bauteil 23.

Die Aufnahmen 36, 37 der in Umfangsrichtung abwechselnd angeordneten Nietelemente 34, 35 sind, wie aus Figur 2 zu entnehmen ist, axial entgegengerichtet offen ausgebildet. Durch eine derartige Anordnung beziehungsweise Ausbildung der Aufnahmen 36, 37 wird eine axiale Sicherung des federnden, ringartigen Bauteiles 23 gegenüber der Tellerfeder 10 gewährleistet. Die Nietelemente 34, 35 dienen weiterhin zur Bildung der Schwenklagerung 12 für die Tellerfeder 10. Hierfür besitzen die Nietelemente 34, 35 radiale Nasen 38, die hier unter Zwischenlegung eines Drahtringes 39 axial am Innenrand des Gehäuses 4 abgestützt sind. Auf radialer Höhe des Drahtringes 39 bildet das Gehäuse 4 eine ringartige Abstützung 40, um die die Tellerfeder 10 verschwenkbar ist. Die ringförmige Abstützung 40 ist hier einstückig mit dem Deckel beziehungsweise Gehäuse 4 ausgebildet, sie könnte jedoch auch durch einen Drahtring gebildet sein, der zwischen Tellerfeder 10 und Gehäuse 4 angeordnet wird. Diese Ausgestaltung der Schwenklagerung 12 gewährleistet eine axiale Festlegung der Tellerfeder 10 gegenüber dem Gehäuse 4.

Die Halte- beziehungsweise Nietelemente 34, 35 für den Federring 23 sind in Bezug auf die Schwenklagerung 12 derart ausgebildet und angeordnet, dass - wie des aus Figur 3 erkennbar ist - bei einer Verschwenkung der Tellerfeder 10 in Ausrückrichtung 41 auch eine Verschwenkung dieser Nietelemente 34, 35 radial nach innen hin erfolgt und zwar in Richtung des Pfeiles 42. Die Nietelemente 34, 35 erhalten dadurch im Verhältnis zu der Rotationsachse 24 eine Schrägstellung. Wie insbesondere aus Figur 2a zu entnehmen ist, sind die Nietelemente 34, 35 derart ausgebildet, dass der Federring 23 gegenüber der Tellerfeder 10 beziehungsweise der Abwälzkontur der ringförmigen Abstützung 40 für diese Tellerfeder 10 in einem bestimmten Abstand 43 angeordnet ist. Durch diese ganz spezielle Anordnung beziehungsweise Positionierung des Federringes 23 und der bei Betätigung der Reibungskupplung 1 erfolgenden Verschwenkung der Nietelemente 34, 35 wird der ringartige Federring 23 beim Ausrücken der Reibungskupplung 2 durchmessermäßig verkleinert. Diese durchmessermäßige Verkleinerung des Federringes 23 bewirkt, dass das freie Ende 26 eine praktisch lineare Bewegung erfährt. Bei ausreichend großem Verschleiß im Bereich der Reibbeläge 6a und entsprechendem Betätigungsweg in Richtung des Pfeiles 42 der Zungenspitzen 9a bewirkt diese Bewegung des Endes 26 eine ausreichend große Verdrehung der Tellerfeder 10 gegenüber dem Gehäuse 4, wodurch eine der Verzahnungen 31 um einen Betrag verdreht wird, der ein Einrasten in einer folgenden Gegenverzahnung 30 ermöglicht. Während der Schließphase der Reibungskupplung 2 schwenken die Nietelemente 34, 35 wieder zurück, so dass sich der Federring 23 durchmessermäßig wieder vergrößern kann. Die Verwendung dreier Profilierungen 31, die in Bezug auf die Gegenprofilierungen 30 jeweils um ein Drittel einer Zahnteilung versetzt zueinander angeordnet sind, ermöglicht eine feinere Nachstellung des Verschleißes.

Aus den Figuren ist zu entnehmen, dass die Größe der durchmessermäßigen Veränderungen des Federringes 23 beeinflusst werden kann durch entsprechende Wahl des radialen und axialen Abstandes dieses Federringes 23 in Bezug auf die Abwälzkontur der ringförmigen Abstützung 40 für die Tellerfeder 10. So kann beispielsweise durch Vergrößerung des Abstandes 43 auch eine Vergrößerung der Durchmesserveränderungen des Federringes 23 während der Betätigung der Reibungskupplung 2 erreicht werden.

In vorteilhafter Weise kann das ringartige, federnde Bauteil 23 derart ausgebildet sein, dass es zumindest in dem in Figur 2 dargestellten geschlossenen Zustand der Reibungskupplung 2 radial vorgespannt ist. Besonders vorteilhaft kann es dabei sein, wenn das federnde Bauteil 23 eine Vorspannung in Richtung der Rotationsachse 24 aufweist. Eine derartige Vorspannung kann dadurch erzielt werden, dass das ringartige, federnde Bauteil 23 im unbelasteten Zustand einen geringeren Durchmesser aufweist als der in Figur 1 ersichtliche. Für manche Anwendungsfälle kann es jedoch auch zweckmäßig sein, wenn die Vorspannung radial nach außen gerichtet ist, also weg von der Rotationsachse 24 oder aber praktisch keine Vorspannung vorhanden ist.

Das ringartige, federnde Bauteil 23 wird fliehkraftmäßig von den Nietelementen 34, 35 abgestützt.

Wie insbesondere aus Figur 1 erkennbar ist, sind die beiden freilaufähnlichen Einrichtungen 27 und 28 in die gleiche Drehrichtung, nämlich hier entgegen des Uhrzeigerdrehsinns, wirksam. Die freilaufähnlichen Einrichtungen 27 und 28 besitzen also im Uhrzeigerdrehsinn der Tellerfeder 10 gegenüber dem Gehäuse 4 eine Sperrwirkung.

Beim Betätigen der Reibungskupplung 2, durch Verschwenken der Tellerfeder 10 um die Verschwenklagerung 12, erfolgt also beim Ausrücken ein Zusammenziehen beziehungsweise Zusammendrücken des Federringes 23 und ein Aufweiten dieses Federringes 23 beim Wiedereinkuppeln beziehungsweise Schließen der Reibungskupplung 2.

Zweckmäßig kann es sein, wenn der Verschwenkwinkel beziehungsweise Verschwenkweg der Tellerfeder 10 begrenzt wird. Hierfür kann beispielsweise, wie dies aus Figur 3 entnehmbar ist, am Gehäuse 4 eine Begrenzung 43 vorgesehen werden, die hier als Anschlag für die radial äußeren Bereiche der Tellerfeder 10 dient. Eine derartige Begrenzung kann jedoch auch an anderer Stelle vorgesehen werden. Es wird in diesem Zusammenhang auf die DE 4322677 A1 verwiesen, in der verschiedene Ausgestaltungsmöglichkeiten von Ausrückwegbegrenzungen in Zusammenhang mit selbstnachstellenden Reibungskupplungen beschrieben und dargestellt sind.

Falls gewünscht beziehungsweise notwendig, kann die Verschleißnachstellung auch mittels eines Betätigungsweges der Zungenspitzen 9a erfolgen, der größer ist als der zum Schalten des Getriebes erforderliche normale Betätigungsweg. Ein derartiger über den normalen Betätigungsweg der Reibungskupplung 2 erfolgender Nachstellbetätigungsweg kann in besonders einfacher Weise mittels eines Betätigungssystems realisiert werden, das eine automatisierte oder vollautomatische Betätigung der Reibungskupplung 2 und/oder des mit diesem zusammenwirkenden Getriebes ermöglicht. Automatisierte Reibungskupplungen und/oder Getriebe sind beispielsweise durch die DE 19823089 A1, die DE 19750824 A1, die DE 4433825 A1 und die DE 4042694 A1 sowie durch den in diesen angegebenen Stand der Technik bekannt geworden. Die erfindungsgemäß ausgestalteten Reibungskupplungen können insbesondere in Verbindung mit Antriebssystemen für Kraftfahrzeuge Verwendung finden, bei denen die Betätigungseinrichtungen beziehungsweise die Aktorsysteme für die entsprechende Reibungskupplung eine Positionsermittlung und Verarbeitung zumindest einzelner Parameter wenigstens des Betätigungszustandes der Reibungskupplung ermöglichen. Dabei kann es vorteilhaft sein, wenn zumindest ein dem voll ausgerückten und/oder zumindest ein dem voll eingerückten Zustand der entsprechenden Reibungskupplung zugeordneter Wert ermittelbar und abspeicherbar ist. Die ermittelten Werte können gegebenenfalls in Abhängigkeit von verschiedenen Parametern zumindest über die Lebensdauer der Kupplung korrigiert werden. Die Verwendung derartiger Betätigungssysteme für Reibungskupplungen ermöglicht es, eine Veränderung innerhalb des Betätigungssystems beziehungsweise der Reibungskupplung in Folge eines aufgetretenen Verschleißes zu ermitteln. Bei Ermittlung einer definierten Größe der Veränderung, zum Beispiel im Betätigungsweg oder im Ausrückkraftverlauf der Reibungskupplung kann eine gezielte Betätigung der Reibungskupplung zum Zwecke einer Verschleißnachstellung ausgelöst werden. Durch eine derartige Betätigung kann die Relativverdrehung zwischen der Hebelanordnung 8 beziehungsweise der Tellerfeder 10 und hier dem Gehäuse 4 erzeugt werden.

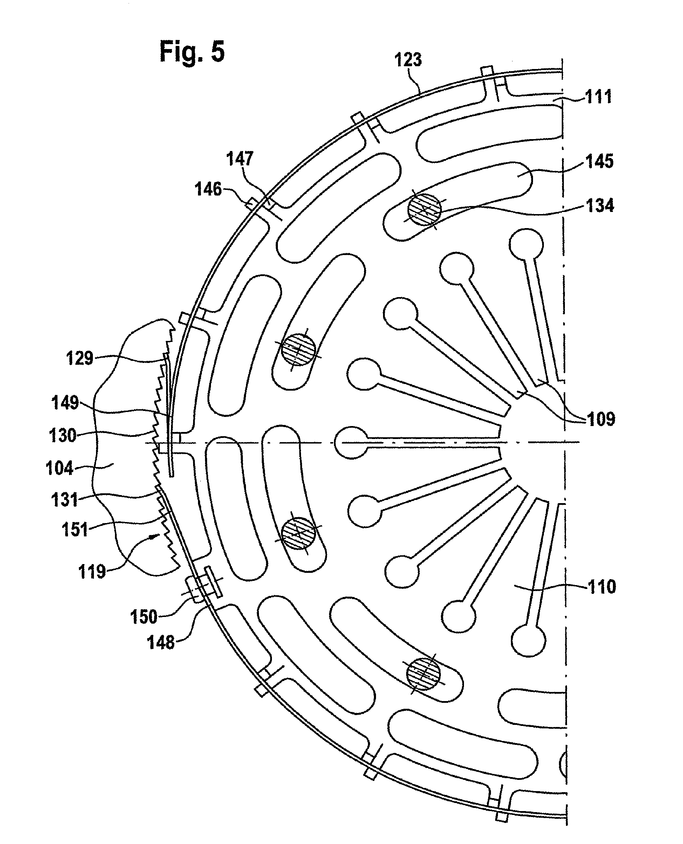

Die in den Figuren 4 und 5 dargestellte Ausführungsvariante eines Kupplungsaggregates 101 besitzt einen ähnlichen Grundaufbau wie die bereits beschriebene Variante. Das Kupplungsaggregat 101 umfasst wiederum eine Reibungskupplung 102, die auf einer Gegendruckplatte 103 befestigt ist. Die Reibungskupplung 102 besitzt ein Gehäuse 104, an dem eine Tellerfeder 110 verschwenkbar gelagert ist. Die Schwenklagerung 112 umfasst bei dem dargestellten Ausführungsbeispiel Haltebolzen 134, die fest mit dem Gehäuse 104 vernietet sind, sowie zwei beidseits der Tellerfeder 110 vorgesehene Verschwenkauflagen, die hier durch Drahtringe 144 gebildet sind. Auf radialer Höhe der Schwenklagerungen 112 wird die Tellerfeder 110 beim Betätigen der Reibungskupplung 102 nach Art eines zweiarmigen Hebels verschwenkt. Die Tellerfeder 110 besitzt wiederum einen ringförmigen äußeren Randbereich 111, der als Energiespeicher dient, sowie einstückig mit diesem ausgebildete Zungen 109, welche als Hebelelemente dienen.

Aus den Figuren ist entnehmbar, dass die Schwenklagerungen 112 im radialen Erstreckungsbereich des ringförmigen Grundkörpers 111 vorgesehen sind. Es ist auch insbesondere aus Figur 5 ersichtlich, dass in diesem ringförmigen Grundkörper 111 bogen- beziehungsweise sektorförmige Ausschnitte 145 eingebracht sind, durch welche sich die Halteelemente in Form von Haltebolzen 134 axial hindurch erstrecken. Die Ausschnitte 145 ermöglichen eine Verdrehung der Tellerfeder 110 gegenüber dem Kupplungsgehäuse 104 zum Zwecke einer Verschleißnachstellung.

In ähnlicher Weise, wie diesen Zusammenhang mit den Figuren 1 bis 3 beschrieben wurde, besitzt auch die Reibungskupplung 102 einer Rampenanordnung 120, die zwischen der Anpressplatte 105 und der Tellerfeder 110 vorgesehen ist.

Die Verschleißsensoreinrichtung 119 arbeitet in ähnlicher Weise, wie dies in Zusammenhang mit der Verschleißsensoreinrichtung 19 beschrieben wurde. Die Verschleißsensoreinrichtung 119 umfasst wiederum ein ringartiges Bauteil 123, das hier von einem federnden, ringförmigen Blechband gebildet ist. Dieses Blechband 123 ist auf der Tellerfeder 110 derart montiert, dass in Abhängigkeit einer gezielten Konizitätsveränderung der Tellerfeder 110 dieses Blechband sich durchmessermäßig verkleinert und wieder erweitert, und zwar in ähnlicher Weise wie dies in Zusammenhang mit dem ringartigen Bauteil 23 beschrieben wurde. Das Blechband 123 wird hier an der Tellerfeder 110 mittels axial abgebogenen Zungen 146, 147 gehaltert. Wie aus Figur 5 ersichtlich ist, ist bei dem dargestellten Ausführungsbeispiel jeweils eine Zunge 146 einer Zunge 147 umfangsmäßig benachbart, wobei die Zungen 146 das federnde Blechband 123 radial außen abstützen und die Zungen 147 dieses Blechband 123 radial innen abstützen, wodurch eine einwandfreie radiale Führung des Blechbandes 123 gewährleistet ist. In Umfangsrichtung kann sich das Blechband 123 jedoch zwischen den Zungen 146 und 147 bewegen. Dadurch wird die vorerwähnte durchmessermäßige Verkleinerung und Erweiterung des Blechbandes in Abhängigkeit einer Konizitätsveränderung der Tellerfeder 110 ermöglicht.

Wie aus Figur 5 weiterhin ersichtlich ist, ist das Blechband 123 in einem Endbereich 148 drehfest mit der Tellerfeder 110 verbunden, wohingegen der andere Endbereich 149 in Umfangsrichtung verschiebbar ist. In diesem Endbereich 149 trägt beziehungsweise bildet das Band 123 eine radial federnde Profilierung 129, die mit einer vom Gehäuse 104 getragenen Gegenprofilierung 130 zusammenwirkt, und zwar in ähnlicher Weise, wie dies in Zusammenhang mit den Profilierungen 29 und 30 beschrieben wurde.

Der mit der Tellerfeder 110 drehverbundene Endbereich 148 erstreckt sich in Umfangsrichtung über die Befestigungsstelle 150 hinaus, wobei das dadurch gebildete freie Ende 151 zumindest eine Profilierung 131 bildet, die in die zahnartigen Profilierungen 130 eingreift. Die Profilierung 131 übernimmt die gleiche Funktion, wie die bereits beschriebenen Profilierungen 31.

Die Verschleißnachstellung erfolgt in ähnlicher Weise wie dies in Zusammenhang mit den Figuren 1 bis 3 beschrieben wurde, durch Verdrehung der Tellerfeder 110 gegenüber dem Gehäuse 104. Hierfür sind die Langlöcher 145 in Umfangsrichtung entsprechend dimensioniert. Falls erwünscht, kann die maximal zulässige Verschleißnachstellung durch Anschlagen wenigstens eines der Halterelemente 134 an den Endbereichen einer Ausnehmung 145 begrenzt werden.

Die Ausführungsbeispiele sind nicht als Einschränkung der Erfindung zu verstehen. Vielmehr sind im Rahmen der vorliegenden Offenbarung zahlreiche Abänderungen und Modifikationen möglich innerhalb den Unfang der beigefügter Ansprüche.

### Bezugszeichenliste

- 1.: Kupplungsaggregat
- 2.: Reibungskupplung
- 3.: Schwungrad
- 4.: Gehäuse
- 5.: Anpressplatte
- 6.: Kupplungsscheibe
- 6a: Reibbeläge
- 7.: Getriebeeingangswelle
- 8.: Hebelanordnung
- 9.: Hebelelemente
- 9a: Zungenspitzen
- 10.: ringförmiges Bauteil, Tellerfeder
- 11.: ringförmiger Bereich
- 12.: Verschwenklagerung
- 13.: ringförmiger Bereich
- 14.: Nocken
- 15.: Schlitze
- 16.: Erweiterungen
- 17.: Verschleißnachstelleinrichtung
- 18.: Betätigungslager
- 19.: Verschleißsensoreinrichtung
- 20.: Ausgleichseinrichtung
- 21.: angeformte Rampenanordnung
- 22.: angeformte Rampenanordnung
- 23.: ringartiges Bauteil
- 24.: Drehachse
- 25.: das eine Ende
- 26.: das andere Ende
- 27.: freilaufähnliche Einrichtung
- 28.: freilaufähnliche Einrichtung
- 29.: zahnartige Profilierung
- 30.: Gegenprofilierung
- 31.: Profilierungen
- 32.: kammartig ausgebildetes Element
- 33.: drei Federstäbe
- 34.: Nietelemente
- 35.: Nietelemente
- 36.: nutartige Aufnahmen
- 37.: nutartige Aufnahmen
- 38.: radiale Nasen
- 39.: Drahtring
- 40.: ringartige Abstützung
- 41.: Ausrückrichtung
- 42.: Pfeil
- 43.: bestimmter Abstand
- 101: Kupplungsaggregat
- 102: Reibungskupplung
- 103: Gegendruckplatte
- 104: Gehäuse
- 105: Anpressplatte
- 109: ausgebildete Zungen
- 110: Tellerfeder
- 111: Äußere Randbereich
- 112: Schwenklagerung
- 119: Verschleißsensoreinrichtung
- 120: Rampenanordnung
- 129: radial federnde Profilierung
- 130: Gegenprofilierung
- 131: Profilierung
- 132: -
- 133: -
- 134: Haltebolzen
- 144: Drahtring
- 145: sektorförmige Ausschnitte
- 146: axial abgebogene Zungen
- 147: axial abgebogene Zungen
- 148: Endbereich
- 149: Endbereich
- 150: Befestigungsstelle
- 151: gebildetes freies Ende

## Patentansprüche

1. Reibungskupplung (2) mit einem Gehäuse (4) und einer mit diesem drehfest, jedoch axial begrenzt verlagerbar verbundenen Anpressplatte (5), wobei zwischen Gehäuse (4) und Anpressplatte (5) eine verschwenkbare Hebelanordnung (8) vorgesehen ist, mittels derer die Anpressplatte (5) zum Ein- und Ausrücken der Reibungskupplung (2) betätigbar ist, die Hebelanordnung (8) eine Mehrzahl von ringartig um die Rotationsachse der Reibungskupplung angeordneten Hebelelementen (9) umfasst, **dadurch gekennzeichnet, dass** ein ringartiges Bauteil (23) mit der Hebelanordnung (8) derart in Wirkverbindung steht, dass es durch Verschwenkung der Hebelanordnung eine radiale Aufweitung und Verkleinerung erfahren kann,
- wobei das ringartige Bauteil (23) zwei Endbereiche (25,26) besitzt, von denen der eine gegenüber der Hebelanordnung zumindest in Umfangsrichtung fest ist und der andere während einer Aufweitung und Verkleinerung des ringartigen Bauteils eine im Wesentlichen lineare Bewegung erfährt, mittels der eine Betätigung einer die Hebelanordnung (8) verdrehenden Verstelleinrichtung auslösbar ist.

2. Reibungskupplung nach Anspruch 1, **dadurch gekennzeichnet, dass** die Verstelleinrichtung zwischen dem ringartigen Bauteil (23) und einem gegenüber der Hebelanordnung (8) verdrehbaren weiteren Bauteil der Reibungskupplung wirksam ist.

3. Reibungskupplung nach Anspruch 1 oder 2, **dadurch gekennzeichnet, dass** die Hebelelemente (9) zur Bildung eines ringförmigen Bauteils miteinander verbunden sind, wobei das ringförmige Bauteil (23) durch Verschwenkung der Hebelanordnung (8) in seiner Konizität veränderbar ist.

4. Reibungskupplung nach Anspruch 3, **dadurch gekennzeichnet, dass** das ringartige Bauteil (23) eine Tellerfeder bildet.

5. Reibungskupplung nach Anspruch 3 oder 4, **dadurch gekennzeichnet, dass** das ringförmige Bauteil (23) federnd ist und bei montierter Reibungskupplung deren Schließkraft zumindest teilweise erzeugt.

6. Reibungskupplung nach einem der Ansprüche 1 bis 5, **dadurch gekennzeichnet, dass** zwischen der Hebelanordnung (8) und der Anpressplatte (5) eine zumindest den Verschleiß der Reibbeläge einer mit der Reibungskupplung zusammenwirkenden Kupplungsscheibe (6) ausgleichende Kompensationseinrichtung vorhanden ist.

7. Reibungskupplung nach Anspruch 6, **dadurch gekennzeichnet, dass** die Kompensationseinrichtung eine Rampenanordnung (21,22) umfasst.

8. Reibungskupplung nach Anspruch 7, **dadurch gekennzeichnet, dass** die Rampenanordnung (21,22) mehrere in Umfangsrichtung angeordnete, in axialer Richtung ansteigende Rampen umfasst.

9. Reibungskupplung nach einem der Ansprüche 1 bis 8, **dadurch gekennzeichnet, dass** die Kompensationseinrichtung durch Verdrehung der Hebelanordnung (8) mittels der Verstelleinrichtung betätigt wird.

10. Reibungskupplung nach einem der Ansprüche 1 bis 9, **dadurch gekennzeichnet, dass** das ringartige Bauteil (23) im Verhältnis zu der Hebelanordnung (8) zumindest stellenweise in radialer Richtung abgestützt und in Umfangsrichtung geführt ist.

11. Reibungskupplung nach Anspruch 10, **dadurch gekennzeichnet, dass** die Abstützung und Führung des ringartigen Bauteils (23) mittels mit den Hebelelementen (9) verbundenen Abstützelementen erfolgt.

12. Reibungskupplung nach Anspruch 11, **dadurch gekennzeichnet, dass** eine Vielzahl von in ringartiger Anordnung vorgesehenen Abstützelementen vorhanden ist.

13. Reibungskupplung nach Anspruch 11 oder 12, **dadurch gekennzeichnet, dass** die Abstützelemente einstückig mit dem die Hebelelemente (9) oder das ringförmige Bauteil (23) bildenden Material ausgebildet sind.

14. Reibungskupplung nach einem der Ansprüche 10 bis 12, **dadurch gekennzeichnet, dass** die Abstützelemente durch getrennte Bauteile gebildet sind.

15. Reibungskupplung nach Anspruch 14, **dadurch gekennzeichnet, dass** die Abstützelemente mit Hebelelementen (9) vernietet sind.

16. Reibungskupplung nach einem der Ansprüche 10 bis 15, **dadurch gekennzeichnet, dass** die Abstützelemente die Hebelelemente (9) oder das ringförmige Bauteil, wie Tellerfeder, am Gehäuse (4) verschwenkbar abstützen.

17. Reibungskupplung nach einem der Ansprüche 1 bis 16, **dadurch gekennzeichnet, dass** das ringartige Bauteil (23) axial beabstandet ist von den Hebelelementen (9).

18. Reibungskupplung nach einem der Ansprüche 1 bis 17, **dadurch gekennzeichnet, dass** die Hebelelemente (9) oder das ringförmige Bauteil (23) gegen eine vom Gehäuse (4) getragene Schwenklagerung zumindest im eingerückten Zustand der Reibungskupplung verspannt sind und das ringartige Bauteil (23) gegenüber dieser Schwenklagerung axial versetzt ist.

19. Reibungskupplung nach einem der Ansprüche 1 bis 18, **dadurch gekennzeichnet, dass** die Verstelleinrichtung freilaufähnlich wirkt und ein Zurückdrehen der Hebelanordnung (8) sperrt.

20. Reibungskupplung nach einem der Ansprüche 1 bis 19, **dadurch gekennzeichnet, dass** zwischen der Hebelanordnung (8) und einem gegenüber dieser verdrehbaren weiteren Bauteil der Reibungskupplung eine weitere freilaufähnlich wirkende Sperreinrichtung vorgesehen ist, die ein Zurückdrehen der Hebelanordnung blockiert.

21. Reibungskupplung nach einem der Ansprüche 1 bis 20, **dadurch gekennzeichnet, dass** zumindest die Hebelelemente (9) oder das ringförmige Bauteil (23) in Umfangsrichtung verlaufende, sich axial erhebende Auflauframpen besitzen.

22. Reibungskupplung nach einem der Ansprüche 1 bis 21, **dadurch gekennzeichnet, dass** die Anpressplatte (5) und/oder das Gehäuse (4) Gegenauflauframpen aufweist, die mit den Auflauframpen zusammenwirken.

23. Reibungskupplung nach einem der Ansprüche 1 bis 22, **dadurch gekennzeichnet, dass** die Verstelleinrichtung und/oder die weitere Sperreinrichtung ineinandergreifende Profilierungen und Gegenprofilierungen aufweisen, welche in die eine Relatiwerdrehrichtung eine Verdrehung der Hebelanordnung (8) gegenüber dem Gehäuse (4) ermöglichen, jedoch in die andere Relativverdrehrichtung eine Sperrwirkung besitzen.

24. Reibungskupplung nach Anspruch 23, **dadurch gekennzeichnet, dass** die Profilierungen und Gegenprofilierungen federnd verspannt sind.

25. Reibungskupplung nach Anspruch 23 oder 24, **dadurch gekennzeichnet, dass** die Profilierungen und Gegenprofilierungen durch Zähne gebildet sind.

## Claims

1. Friction clutch (2) having a housing (4) and having a pressure plate (5) which is connected to said housing (4) so as to be rotationally fixed yet axially movable to a limited extent, with a pivotable lever arrangement (8) being provided between the housing (4) and pressure plate (5), by means of which lever arrangement (8) the pressure plate (5) can be actuated in order to engage and disengage the friction clutch (2), the lever arrangement (8) comprises a multiplicity of lever elements (9) which are arranged annularly around the rotational axis of the friction clutch, **characterized in that** an annular component (23) is operatively connected to the lever arrangement (8) in such a way that said annular component (23) can be radially expanded and contracted by means of a pivoting movement of the lever arrangement,
- with the annular component (23) having two end regions (25, 26), the one of which is fixed at least in the circumferential direction with respect to the lever arrangement and the other performs a substantially linear movement during an expansion and contraction of the annular component, by means of which substantially linear movement an actuation of an adjusting device, which rotates the lever arrangement (8), can be triggered.

2. Friction clutch according to Claim 1,
**characterized in that** the adjusting device acts between the annular component (23) and a further component, which is rotatable relative to the lever arrangement (8), of the friction clutch.

3. Friction clutch according to Claim 1 or 2,
**characterized in that** the lever elements (9) are connected to one another so as to form an annular component, with it being possible for the annular component (23) to be varied in terms of its conicity by means of a pivoting movement of the lever arrangement (8).

4. Friction clutch according to Claim 3,
**characterized in that** the annular component (23) forms a plate spring.

5. Friction clutch according to Claim 3 or 4,
**characterized in that** the annular component (23) is resilient and at least partially generates the closing force of the friction clutch when the latter is assembled.

6. Friction clutch according to one of Claims 1 to 5, **characterized in that** a compensation device, which compensates at least the wear of the friction linings of a clutch disc (6) which interacts with the friction clutch, is provided between the lever arrangement (8) and the pressure plate (5).

7. Friction clutch according to Claim 6,
**characterized in that** the compensation device comprises a ramp arrangement (21, 22).

8. Friction clutch according to Claim 7,
**characterized in that** the ramp arrangement (21, 22) comprises a plurality of ramps which are arranged in the circumferential direction and which rise in the axial direction.

9. Friction clutch according to one of Claims 1 to 8, **characterized in that** the compensation device is actuated by a rotation of the lever arrangement (8) by means of the adjusting device.

10. Friction clutch according to one of Claims 1 to 9, **characterized in that** the annular component (23) is supported in relation to the lever arrangement (8) and is guided in the circumferential direction at least in places.

11. Friction clutch according to Claim 10,
**characterized in that** the support and guidance of the annular component (23) is provided by means of support elements which are connected to the lever elements (9).

12. Friction clutch according to Claim 11,
**characterized in that** a multiplicity of support elements are provided in an annular arrangement.

13. Friction clutch according to Claim 11 or 12,
**characterized in that** the support elements are formed in one piece with the material which forms the lever elements (9) or the annular component (23).

14. Friction clutch according to one of Claims 10 to 12, **characterized in that** the support elements are formed by separate components.

15. Friction clutch according to Claim 14,
**characterized in that** the support elements are riveted to the lever elements (9).

16. Friction clutch according to one of Claims 10 to 15, **characterized in that** the support elements pivotably support the lever elements (9) or the annular component, such as a plate spring, on the housing (4).

17. Friction clutch according to one of Claims 1 to 16, **characterized in that** the annular component (23) is axially spaced apart from the lever elements (9).

18. Friction clutch according to one of Claims 1 to 17, **characterized in that** the lever elements (9) or the annular component (23) are braced against a pivot bearing arrangement, which is supported by the housing (4), at least in the engaged state of the friction clutch, and the annular component (23) is axially offset in relation to said pivot bearing arrangement.

19. Friction clutch according to one of Claims 1 to 18, **characterized in that** the adjusting device acts in the manner of a freewheel and prevents a backward rotation of the lever arrangement (8).

20. Friction clutch according to one of Claims 1 to 19, **characterized in that** a further blocking device, which acts in the manner of a freewheel, is provided between the lever arrangement (8) and a further component, which is rotatable relative thereto, of the friction clutch, which further blocking device blocks a backward rotation of the lever arrangement.

21. Friction clutch according to one of Claims 1 to 20, **characterized in that** at least the lever elements (9) or the annular component (23) have run-on ramps which run in the circumferential direction and which rise axially.

22. Friction clutch according to one of Claims 1 to 21, **characterized in that** the pressure plate (5) and/or the housing (4) have/has counterpart run-on ramps which interact with the run-on ramps.

23. Friction clutch according to one of Claims 1 to 22, **characterized in that** the adjusting device and/or the further blocking device have profilings and counterpart profilings which engage into one another and which permit a rotation of the lever arrangement (8) with respect to the housing (4) in the one direction of relative rotation but which have a blocking action in the other direction of relative rotation.

24. Friction clutch according to Claim 23, **characterized in that** the profilings and counterpart profilings are braced in a resilient fashion.

25. Friction clutch according to Claim 23 or 24, **characterized in that** the profilings and counterpart profilings are formed by teeth.

## Revendications

1. Embrayage à friction (2) comprenant un boîtier (4) et une plaque de pressage (5) connectée de manière solidaire en rotation avec celui-ci mais toutefois déplaçable de manière limitée axialement, un agencement de levier pivotant (8) étant prévu entre le boîtier (4) et la plaque de pressage (5), au moyen duquel la plaque de pressage (5) peut être activée pour embrayer et désembrayer l'embrayage à friction (2), l'agencement de levier (8) comprenant une pluralité d'éléments de levier (9) disposés en forme d'anneau autour de l'axe de rotation de l'embrayage à friction, **caractérisé en ce qu'**un composant annulaire (23) est en liaison fonctionnelle avec l'agencement de levier (8) de telle sorte qu'il puisse subir un élargissement radial et un rétrécissement radial par pivotement de l'agencement de levier,
- le composant annulaire (23) possédant deux régions d'extrémité (25, 26) dont l'une est fixée par rapport à l'agencement de levier au moins dans la direction périphérique et dont l'autre effectue un mouvement sensiblement linéaire pendant un élargissement ou un rétrécissement du composant annulaire, au moyen duquel mouvement un actionnement d'un dispositif de réglage faisant tourner l'agencement de levier (8) peut être déclenché.

2. Embrayage à friction selon la revendication 1, **caractérisé en ce que** le dispositif de réglage agit entre le composant annulaire (23) et un autre composant de l'embrayage à friction pouvant tourner par rapport à l'agencement de levier (8).

3. Embrayage à friction selon la revendication 1 ou 2, **caractérisé en ce que** les éléments de levier (9) sont connectés les uns aux autres pour former un composant annulaire, le composant annulaire (23) pouvant varier sa conicité par pivotement de l'agencement de levier (8).

4. Embrayage à friction selon la revendication 3, **caractérisé en ce que** le composant annulaire (23) forme un ressort Belleville.

5. Embrayage à friction selon la revendication 3 ou 4, **caractérisé en ce que** le composant annulaire (23) est élastique et produit au moins partiellement la force de fermeture lorsque l'embrayage à friction est monté.

6. Embrayage à friction selon l'une quelconque des revendications 1 à 5, **caractérisé en ce qu'**un dispositif de compensation compensant au moins l'usure des garnitures de friction d'un disque d'embrayage (6) coopérant avec l'embrayage à friction est prévu entre l'agencement de levier (8) et la plaque de pressage (5).

7. Embrayage à friction selon la revendication 6, **caractérisé en ce que** le dispositif de compensation comprend un agencement de rampe (21, 22).

8. Embrayage à friction selon la revendication 7, **caractérisé en ce que** l'agencement de rampe (21, 22) comprend plusieurs rampes disposées dans la direction périphérique, montant dans la direction axiale.

9. Embrayage à friction selon l'une quelconque des revendications 1 à 8, **caractérisé en ce que** le dispositif de compensation est actionné par rotation de l'agencement de levier (8) au moyen du dispositif de réglage.

10. Embrayage à friction selon l'une quelconque des revendications 1 à 9, **caractérisé en ce que** le composant annulaire (23) est supporté au moins en partie dans la direction radiale par rapport à l'agencement de levier (8) et est guidé dans la direction périphérique.

11. Embrayage à friction selon la revendication 10, **caractérisé en ce que** le support et le guidage du composant annulaire (23) s'effectue au moyen d'éléments de support connectés aux éléments de levier (9).

12. Embrayage à friction selon la revendication 11, **caractérisé en ce qu'**il est prévu une pluralité d'éléments de support prévus suivant un agencement annulaire.

13. Embrayage à friction selon la revendication 11 ou 12, **caractérisé en ce que** les éléments de support sont réalisés d'une seule pièce avec le matériau formant les éléments de levier (9) ou le composant annulaire (23).

14. Embrayage à friction selon l'une quelconque des revendications 10 à 12, **caractérisé en ce que** les éléments de support sont formés par des composants séparés.

15. Embrayage à friction selon la revendication 14, **caractérisé en ce que** les éléments de support sont rivetés aux éléments de levier (9).

16. Embrayage à friction selon l'une quelconque des revendications 10 à 15, **caractérisé en ce que** les éléments de support supportent de manière pivotante les éléments de levier (9) ou le composant annulaire, comme un ressort Belleville, sur le boîtier (4).

17. Embrayage à friction selon l'une quelconque des revendications 1 à 16, **caractérisé en ce que** le composant annulaire (23) est espacé axialement des éléments de levier (9).

18. Embrayage à friction selon l'une quelconque des revendications 1 à 17, **caractérisé en ce que** les éléments de levier (9) ou le composant annulaire (23) sont serrés contre un support de palier pivotant porté par le boîtier (4) au moins dans l'état embrayé de l'embrayage à friction, et le composant annulaire (23) est décalé axialement par rapport à ce support sur palier pivotant.

19. Embrayage à friction selon l'une quelconque des revendications 1 à 18, **caractérisé en ce que** le dispositif de réglage agit comme une roue libre et bloque un retour par rotation de l'agencement de levier (8).

20. Embrayage à friction selon l'une quelconque des revendications 1 à 19, **caractérisé en ce qu'**un autre dispositif d'arrêt agissant comme une roue libre est prévu entre l'agencement de levier (8) et un autre composant rotatif de l'embrayage à friction, et bloque un retour par rotation de l'agencement de levier.

21. Embrayage à friction selon l'une quelconque des revendications 1 à 20, **caractérisé en ce qu'**au moins les éléments de levier (9) ou le composant annulaire (23) possèdent des rampes d'amenée s'étendant dans la direction périphérique et se rehaussant axialement.

22. Embrayage à friction selon l'une quelconque des revendications 1 à 21, **caractérisé en ce que** la plaque de pression (5) et/ou le boîtier (4) présentent des rampes d'amenée conjuguées qui coopèrent avec les rampes d'amenée.

23. Embrayage à friction selon l'une quelconque des revendications 1 à 22, **caractérisé en ce que** le dispositif de réglage et/ou l'autre dispositif d'arrêt présentent des profilages et des contre-profilages s'emboîtant les uns dans les autres, qui, dans un sens de rotation relatif, permettent une rotation de l'agencement de levier (8) par rapport au boîtier (4), mais qui possèdent un effet d'arrêt dans l'autre sens de rotation relatif.

24. Embrayage à friction selon la revendication 23, **caractérisé en ce que** les profilages et les contre-profilages sont serrés élastiquement.

25. Embrayage à friction selon la revendication 23 ou 24, **caractérisé en ce que** les profilages et les contre-profilages sont formés par des dents.
